# EUROPÄISCHE PATENTSCHRIFT

(11) **EP 2 995 665 B1**
(45) Veröffentlichungstag und Bekanntmachung des Hinweises auf die Patenterteilung: **23.11.2016**
(21) Anmeldenummer: 14184148.6
(22) Anmeldetag: 09.09.2014
(51) Int. Cl.: C09J 7/02

(54) **Folienbahn, Fensterrahmen mit einer solchen Bahn und Verwendung dieser Bahn**
Film strip, window frame comprising one such strip, and use of said strip
Bande de feuille, cadre de fenêtre doté d'une telle bande et utilisation de ladite bande

(43) Veröffentlichungstag der Anmeldung: 16.03.2016
(73) Patentinhaber: Henkel AG & Co. KGaA, 40589 Düsseldorf (DE)
(72) Erfinder: Nilges, Heinz-Josef, 41564 Kaarst (DE); Ruppitsch, Christian, 2320 Schwechat (AT)

(56) Entgegenhaltungen:
- EP-A1- 0 187 270
- DE-A1- 10 054 478

## Beschreibung

Die Erfindung betrifft eine mehrlagige Folienbahn für den Baubereich, die vorzugsweise diffusionsoffen bis diffusionssperrend ist, bestehend aus einem, insbesondere bevorzugt thermoplastischen, Kunststoff als Mittellage und überputzbaren Außenlagen ausgewählt aus Vlies, Gewebe, technischem Gewirke, Stricken, Glasfasern, verstärktem Papier, Folien oder einer Kombination davon und einer Selbstklebeschicht, welche auf einer der nicht an der Mittellage liegenden Oberfläche einer der Außenlagen aufgebracht ist,
dadurch gekennzeichnet,
dass die Selbstklebeschicht ein Haft-Schmelzklebstoff ist, welcher umfasst:
a) mindestens ein Styrol-Isopren-Styrol (SIS) Block-Copolymer;
b) mindestens ein Styrol-Butadien Kautschuk (SBR); und
c) mindestens ein klebrig machendes Harz.

Des Weiteren betrifft die Erfindung einen Fensterrahmen mit angeklebter Folienbahn gemäß der vorliegenden Erfindung. Die Verwendung der Folienbahn der vorliegenden Erfindung zum Abdichten der Anschlüsse von Fensterrahmen an tragende Baukörper bei vorgehängten Fassaden sowie bei ein- oder mehrschichtigen Fassaden und mit Wärmedämm-Verbundsystemen zu beschichtenden Fassaden. Die Verwendung der Folienbahn der vorliegenden Erfindung zum Abdichten der Anschlüsse von unterhalb einer Dachkonstruktion angeordneten Dampfsperrfolien an die Außenwände, den Kamin und/oder sonstige Durchdringungen des Daches. Die Verwendung der Folienbahn der vorliegenden Erfindung als ganzflächige Abdichtung von Dächern zur Erzielung der Wind- und Luft-Dichtigkeit und/oder als Wasserdampfdiffusionsbremse bzw. -sperre.

Bei der Anschlussabdichtung von Fenstern zu tragenden Baukörpern ist grundsätzlich zu unterscheiden zwischen vorgehängten Fassaden, bei denen auch die Fenster durch entsprechende Konstruktionen vor dem tragenden Baukörper angebracht sind (vorwiegend bei größeren Objekten, Bürobauten u. ä.), ein- bzw. zweischaligen Fassaden sowie Wärmedämm-Verbundsystemen und sogenannten Lochfenstern, bei denen die Fenster im Bereich der tragenden Konstruktion mehr oder weniger innerhalb der Öffnung montiert werden (vorwiegend Wohnungsbau, kleinere Gebäude der Industrie oder Kommunen).

Um bei vorgehängten Fassaden den Anschluss der Fenster zum Baukörper wasserdicht sowie luft- und winddicht zu erstellen, ist es Stand der Technik, diesen Bereich mit Folien abzudichten. Diese Folien bestehen in der Regel aus Ethylen-Propylen-Dien-Kautschuk oder Butyl, thermoplastische Polyolefine oder Polyvinylchlorid, Polyethylen, Polyester, Polyurethan oder kaschierten Aluminiumfolien. Die Folien werden entweder am Fassadenelement und auf dem Baukörper verklebt und/oder mechanisch befestigt.

Eine weitere Möglichkeit besteht darin, die vorstehend erwähnten Folien rückseitig mit einer selbstklebenden Zusammensetzung, z. B. auf Kunststoff-Bitumen-Basis oder Butylbasis zu versehen und somit selbstklebend auszurüsten.

All diese Folien sind bei fachgerechter Verarbeitung auch funktionell, haben aber den Nachteil, dass sie nicht oder nur mit sehr großem Aufwand überklebbar sind. Sie sind nicht überputzbar mit handelsüblichen Mörteln, wie sie in der DIN 18550 beschrieben sind.

Eine Möglichkeit, luft- und winddicht abzudichten und anschließend zu überputzen, besteht im Einsatz von selbstklebenden Butylbändern, die auf der Oberfläche mit einem Vlies versehen sind. Derartige Butylbänder sind auf dem Baukörper selbstklebend und können in die Fensterkonstruktion entweder hineingeklebt oder mechanisch befestigt werden.

Diese Technik hat aber den Nachteil, dass die Dicke der Butylbänder gleich oder größer als 1 mm ist und dass sie bei Überklebungen über Kopf bei Breiten über 150 mm in der Regel zusätzlich mechanisch befestigt bzw. mit Putzträgern überspannt werden müssen.

Die wesentliche Aufgabe all dieser Folien ist, wie erwähnt, die Wind- und Luftdichtigkeit, zum Teil auch Wasserdichtigkeit, der Anschlüsse respektive Fugen sicherzustellen. Je nach der Einbausituation der Fenster bzw. der Lage der Wärmedämmstoffe wird in Abhängigkeit davon, an welchen Stellen die Folie eingebaut wird bzw. werden kann, eine diffusionsoffene oder diffusionsbremsende bzw. -sperrende Folie eingesetzt. Wenn die Folie auf der sogenannten warmen Seite eingebaut wird, also an einer Stelle, an der die Temperatur aufgrund der Isothermenberechnung die kritische Taupunkttemperatur noch nicht unterschreitet, werden wasserdampfdiffusionsbremsende bzw. -sperrende Folien eingesetzt. Wenn die Folie auf der sogenannten kalten Seite eingebaut wird, also an einer Stelle, an der die Temperatur unterhalb der kritischen Taupunkttemperatur liegt, müssen wasserdampfdiffusionsoffene Folien eingesetzt werden, damit die im Winter zwischen der Folie und der warmen Seite kondensierende Feuchtigkeit in der Sommerperiode wieder hinaus diffundieren kann.

Beim Einsatz von wasserdampfbremsenden bzw. wasserdampfsperrenden Folien sind die nachfolgend geschilderten bauphysikalischen Aspekte von besonderer Bedeutung.

Aufgrund der in Deutschland geltenden DIN 4108 sowie der geltenden Energiesparverordnung EnEV vom 01.10.2009 ist es erforderlich, nicht nur die Anschlussfuge zwischen den Fenstern und tragendem Baukörper selbst abzudichten und zu überbrücken, sondern die Abdichtungsfolie entsprechend den bauphysikalischen Gegebenheiten großflächiger (100 bis 300 mm) auf den tragenden Baukörper zu ziehen.

Diese Anforderung hat die folgenden Gründe: Im Winter ist die absolute Luftfeuchtigkeit in der Regel raumseitig höher als außenseitig, d. h. raumseitig stellt sich ein höherer Wasserdampfdruck ein als außenseitig. Das Dampfdruckgefälle führt zu einem Wasserdampfstrom von innen nach außen. Jedes Material setzt dem Wasserdampfstrom einen gewissen Widerstand entgegen. Die Eigenschaft, mehr oder weniger Wasserdampf durchzulassen, wird durch die Wasserdampfdiffusions-Widerstandszahl (μ-Wert) beschrieben.

Bei nebeneinander liegenden Bauteilen mit unterschiedlichen μ-Werten ist der Baustoff mit dem niedrigsten μ-Wert für den Diffusionsstrom maßgeblich. Wird also nur der Anschluss zwischen Fenster und tragendem Bauwerk, gegebenenfalls auch noch 1 bis 2 cm auf dem tragenden Baukörper mit einem Dichtstoff oder einer Folie mit hohem Wasserdampfdiffusions-Widerstand abgedichtet, gleichzeitig aber ein poröser Außenwandstein verwendet, wie es heute in der Regel der Fall ist, umwandert der Diffusionsstrom diese Abdichtung und ist damit in der Lage, in den Anschlussbereich zwischen Baukörper und Fenster einzudringen. Dort kann der Wasserdampf zu Wasser kondensieren.

Ähnliche Probleme wie im Fensterbereich treten auch im Dachbereich auf.

Es ist Stand der Technik, beim Dachgeschoßausbau von Steildächern bzw. bei Leichtkonstruktionen von Flachdächern raumseitig Dampfsperrfolien einzusetzen, die ein Einwandern von Wasserdampf in die Dachkonstruktion - hier vor allem in den Wärmedämmstoff - verhindern bzw. vermindern sollen, so dass nicht mehr Wasserdampf in die Konstruktion einwandert als in Trockenperioden hinausdiffundieren kann.

Diese Dampfsperrfolien stellen auch gleichzeitig die Luft- und/oder Winddichtigkeit sicher. Um diese Anforderungen der DIN 4108 bzw. der Wärmeschutz-Verordnung zu erfüllen, ist neben einer Verklebung der einzelnen Dampfsperrbahnen untereinander der luft- und winddichte Anschluss am Mauerwerk des Giebels bzw. der Außenwände, am Kamin und an Durchdringungen aller Art von besonderer Bedeutung.

DE 100 54 478 A1 beschreibt eine mehrlagige Folienbahn in diffusionsoffener bis diffusionssperrender Ausführung für den Baubereich bestehend aus einer Mittellage, überputzbaren Außenlagen und einer randseitigen Selbstklebeschicht, welche einen Klebstoff auf Acryl-Basis umfasst.

EP 0187270 offenbart ein Verfahren zur Befestigung eines elastischen Bandes oder Films auf der Oberfläche von bahnförmigen Materialen unter Verwendung einer Hotmeltschicht und einer Schicht aus einem thermoplastisch verarbeitbaren Material. Diese Produkte finden vor allem Anwendung in Haushaltsartikeln, wie Windeln, Monatshygiene-Produkten oder Kleidungsstücken.

Der Einsatz von Klebstoffen auf Acryl-Basis zur Befestigung der Folie ist bekannt. Es besteht jedoch der Bedarf alternative Klebstoffe zu verwenden, um die Handhabung solcher Folien und deren Haftfähigkeit, z.B. am Mauerwerk zu verbessern.

Der Erfindung liegt daher die Aufgabe zugrunde, direkt auf der Baustelle ohne größeren Aufwand und mit der Möglichkeit die Folie nach dem ersten Befestigen einfach zu korrigieren einen absolut luft- und winddichten Anschluss zu erreichen. Zudem soll die Folienbahn eine höhere Haftzugfestigkeit als die im Stand der Technik bekannten aufweisen.

Die Erfinder der vorliegenden Erfindung haben überraschend gefunden, dass die Verwendung einer speziellen Selbstklebeschicht, wie in den Ansprüchen definiert, die vorstehend genannten Nachteile überwinden kann.

Der Ausdruck "im Wesentlichen" im Kontext der vorliegenden Erfindung ist definiert als mehr als 97%, 98%, 98,5%, 99%, 99,5%, 99,9%, 99,99%, oder 99,999%, wobei der jeweilige Wert in aufsteigender Reihenfolge mehr bevorzugt ist. Zum Beispiel ist mehr als 98,5% stärker bevorzugt als mehr als 98% und mehr als 99% ist stärker bevorzugt als mehr als 98,5%.

Das Merkmal "mindestens ein Styrol-Isopren-Styrol (SIS) Block-Copolymer" wird in der vorliegenden Erfindung auch als "SIS" oder "a)" bezeichnet.

Das Merkmal "mindestens ein Styrol-Butadien Kautschuck (SBR) Block-Copolymer" wird in der vorliegenden Erfindung auch als "SBR" oder "b)" bezeichnet.

Der Schmelzflussindex wird in der vorliegenden Erfindung gemäß DIN EN ISO 1133 bei 200°C und einer Prüflast von 5 kg bestimmt.

Das zahlenmittlere Molekulargewicht Mₙ wird in der vorliegenden Erfindung mittels Gelpermeationschromatographie unter Verwendung von Polystyrolstandards bestimmt.

Das gewichtsmittlere Molekulargewicht M_{w} wird in der vorliegenden Erfindung mittels Gelpermeationschromatographie unter Verwendung von Polystyrolstandards bestimmt.

Die vorliegende Erfindung betrifft insbesondere eine mehrlagige Folienbahn für den Baubereich, die vorzugsweise diffusionsoffen bis diffusionssperrend ist, bestehend aus einem, insbesondere bevorzugt thermoplastischen, Kunststoff als Mittellage und überputzbaren Außenlagen ausgewählt aus Vlies, Gewebe, technischem Gewirke, Stricken, Glasfasern, verstärktem Papier, Folien oder einer Kombination davon und einer Selbstklebeschicht, welche auf einer der nicht an der Mittellage liegenden Oberfläche, insbesondere bevorzugt auf der der Mittellage gegenüberliegenden Oberfläche, einer der Außenlagen aufgebracht ist,
dadurch gekennzeichnet,
dass die Selbstklebeschicht ein Haft-Schmelzklebstoff ist, welcher umfasst:
a) mindestens ein Styrol-Isopren-Styrol (SIS) Block-Copolymer;
b) mindestens ein Styrol-Butadien Kautschuk (SBR); und
c) mindestens ein klebrig machendes Harz.

Weitere bevorzugte Ausführungsformen sind in den abhängigen Ansprüchen aufgeführt.

In bevorzugten Ausführungsformen weist das mindestens eine SIS Styrol-Endblöcke und Isopren-Mittelblöcke auf, wobei das mindestens eine Styrol-Isopren-Styrol (SIS) Block-Copolymer einen A-B Diblockgehalt von mindestens 30 Gew.-%, stärker bevorzugt mindestens 40 Gew.-%, am stärksten bevorzugt mindestens 50 Gew.-% des BlockCopolymers aufweist. In weiteren bevorzugten Ausführungsformen beträgt der A-B Diblockgehalt 30 bis 95 Gew.-%, stärker bevorzugt 40 bis 90 Gew.-%, am stärksten bevorzugt 50 bis 80 Gew.-% bezogen auf das Gesamtgewicht von SIS.

In bevorzugten Ausführungsformen weist SIS ein zahlenmittleres Molekulargewicht Mₙ von mindestens 50.000 g/mol, stärker bevorzugt mindestens 85.000 g/mol, am stärksten bevorzugt mindestens 100.000 g/mol auf. In weiteren bevorzugten Ausführungsformen weist das SIS ein gewichtsmittleres Molekulargewicht Mₙ von 50.000 g/mol bis 750.000 g/mol, stärker bevorzugt 100.000 g/mol bis 450.000 g/mol, am stärksten bevorzugt 150.000 g/mol bis 250.000 g/mol auf.

Der Gesamtstyrolgehalt von SIS beträgt in bevorzugten Ausführungsformen weniger als 45 Gew.-%, stärker bevorzugt weniger als 35 Gew.-%, am stärksten bevorzugt weniger als 20 Gew.-%, bezogen auf das Gesamtgewicht von SIS. In weiteren bevorzugten Ausführungsformen beträgt der Gesamtstyrolgehalt von SIS zusätzlich in Kombination zu der vorstehend genannten Obergrenzen mindestens 5 Gew.-%, stärker bevorzugt mindestens 8 Gew.-%, noch stärker bevorzugt mindestens 12 Gew.-%, bezogen auf das Gesamtgewicht von SIS.

In bevorzugten Ausführungsformen enthält der Haft-Schmelzklebstoff 5 bis 15 Gew.-% an SIS, bevorzugt 6 bis 12 Gew.-% an SIS, stärker bevorzugt 8 bis 10 Gew.-% an SIS, bezogen auf das Gesamtgewicht des Haft-Schmelzklebstoffs.

Beispielhafte SIS Block-Copolymere sind kommerziell erhältlich unter dem Namen JSR-SIS-5000 (linear, 15 Gew.-% Styrol bei einem Diblockgehalt von etwa 70 Gew.-% erhältlich von Japan Synthetic Rubber Co., Quintac^{®} SL-113 (linear, 15 Gew.-% Styrol bei einem Diblockgehalt von etwa 79 Gew.-% erhältlich von Nippon Zeon, Quintac^{®} 3433 (linear, 16 Gew.-% Styrol bei einem Diblockgehalt von etwa 59 Gew.-%), Quintac^{®} SH-108 (linear, 25 Gew.-% Styrol bei einem Diblockgehalt von etwa 41 Gew.-% und SIS Block-Copolymere aus der Kraton^{®} D Reihe erhältlich von Shell Chemical Co. Houston, TX. Quintac ^{®} 3422 (linear, Diblockgehalt etwa 10 Gew.-%), Vector ^{®} 4113 D erhältlich bei Dexco Polymer Corp. (linear, Diblockgehalt etwa 22 Gew.-%), Kraton^{®} D-1111, (linear, 21 Gew.-% Styrol bei einem Diblockgehalt von etwa 18 Gew.-%), Europrene® Sol T-190 erhältlich von Enichem Elastomers (linear, mit einem Diblockgehalt von etwa 27 Gew.-%, einem Mₙ von etwa 182,000 g/mol, einem Styrolgehalt von etwa 25 Gew.-%). Vector^{®} 4211 D (linear, Styrolgehalt etwa 29 Gew.-%).

Der Haft-Schmelzklebstoff der vorliegenden Erfindung enthält weiterhin mindestens einen Styrol-Butadien Kautschuk (SBR), welcher ein statistisches Copolymer von Styrol und Butadiene ist. Vorzugsweise umfasst der SBR von 1 bis 45 Gew.-% Styrol, stärker bevorzugt von 10 bis 35 Gew.-%, am stärksten bevorzugt von 12,5 bis 25 Gew.-% in Bezug auf das Gesamtgewicht von SBR. Styrol-Butadien Kautschuke werden gewöhnlich durch Emulsions-Copolymerisation unter Verwendung von freien Radikalstartern hergestellt. Jedoch können auch davon verschiedene Copolymerisationsverfahren, wie z.B. Lösungspolymerisation, verwendet werden.

In bevorzugten Ausführungsformen weist SBR ein zahlenmittleres Molekulargewicht Mₙ von mindestens 50.000 g/mol, stärker bevorzugt mindestens 85.000 g/mol, am stärksten bevorzugt mindestens 100.000 g/mol auf. In weiteren bevorzugten Ausführungsformen weist das SBR ein gewichtsmittleres Molekulargewicht Mₙ von 50.000 g/mol bis 750.000 g/mol, stärker bevorzugt 85.000 g/mol bis 450.000 g/mol, am stärksten bevorzugt 120.000 g/mol bis 250.000 g/mol auf.

In bevorzugten Ausführungsformen enthält der Haft-Schmelzklebstoff 10 bis 35 Gew.-% an SBR, bevorzugt 15 bis 30 Gew.-% an SBR, stärker bevorzugt 18 bis 25 Gew.-% an SBR, bezogen auf das Gesamtgewicht des Haft-Schmelzklebstoffs.

Beispielhafte SBR sind kommerziell erhältlich unter den Handelsnamen Finaprene^{®} von Total Petrochemicals, Belgien und Kraton^{®} von Kraton Polymers, Houston TX.

Zusätzlich zu SIS und SBR, kann der Schmelzklebstoff weitere Styrol-haltige, kautschukartige Polymere oder Copolymere enthalten, welche von SIS und SBR verschieden sind. Dabei handelt es sich um lineare, radiale oder sternförmige Styrolpolymere oder Styrol-Copolymere. Letztere werden vorzugsweise ausgewählt aus Styrol-Ethylen/Butylen-Styrol (SEBS), Styrol-Ethylen/Propylen-Styrol (SEPS), Styrol-Ethylen-Propylen (SEP), Styrol-Butadien-Styrol (SBS) und Styrol-Isopren/Butadien-Styrol (SIBS) Block-Copolymeren. Bevorzugt sind lineare Styrolpolymere oder Styrol-Copolymere zusätzlich enthalten, besonders bevorzugt lineare SEBS-Polymere. Diese zusätzlichen Styrol-haltigen Polymere haben vorzugsweise einen Schmelzflussindex von weniger als 100g/10 Minuten, insbesondere weniger als 20g/10 Minuten, bei 200°C und einer Prüflast von 5 kg, gemessen nach DIN EN ISO 1133.

Der Haft-Schmelzklebstoff der vorliegenden Erfindung enthält weiterhin mindestens ein klebrig machendes Harz (in der vorliegenden Erfindung auch bezeichnet als "c)"). Das mindestens eine klebrig machende Harz weist vorzugsweise einen Erweichungspunkt von 70 bis 140°C, stärker bevorzugt 80 bis 130°C, am stärksten bevorzugt 90 bis 120°C (gemessen nach ASTM E28, ISO 4625) auf. In bevorzugten Ausführungsformen ist das klebrig machende Harz ausgewählt aus Kohlenwasserstoffharzen (aromatische, aliphatische oder clycloaliphatische sowie deren modifizierte oder hydrierte Derivate), Polyterpenharzen (einschließlich phenolisch oder aromatisch modifizierter Polyterpenharze), Kolophoniumharzen oder deren Ester oder Kombinationen davon. In stärker bevorzugten Ausführungsformen ist das mindestens eine klebrig machende Harz ausgewählt aus Kohlenwasserstoffharzen, insbesondere aliphatischen Kohlenwasserstoffharzen oder modifizierten (z.B. aromatisch) aliphatischen Kohlenwasserstoffharzen, und Polyterpenharzen, insbesondere bevorzugt phenolisch modifizierter Polyterpenharze, und Kombinationen davon. Beispielhafte Kohlenwasserstoffharze sind kommerziell erhältlich unter dem Handelsnamen Escorez™ von Exxon Mobil Chemical Houston, TX, z.B. Escorez™ 2203. Beispielhafte Polyterpenharze sind kommerziell erhältlich unter dem Handelsnamen Dertophene^{®} von DRT Dax Cedex, Frankreich.

Ebenfalls verwendet werden können modifizierte Naturharze wie Harzsäuren aus Balsamharz, Tallharz oder Wurzelharz, ggf. auch Hydroabietylalkohol und dessen Ester, Acrylsäure-Copolymerisate, wie Styrol-Acrylsäure-Copolymere und Harze auf Basis funktioneller Kohlenwasserstoffharze.

Eine beispielhafte Mischung von klebrig machenden Harzen besteht aus aromatisch modifizierten C5-Kohlenwasserstoffharzen mit einem Erweichungspunkt zwischen 95 und 105°C, wie sie beispielsweise unter dem Handelsnamen Wingtack™ Extra Flakes (Cray Valley, USA) kommerziell erhältlich sind, und aromatisch modifizierten, hydrierten, bei Raumtemperatur flüssigen C9-Kohlenwasserstoffharzen, wie sie beispielsweise unter dem Handelsnamen Regalite™ R von Eastman, USA kommerziell erhältlich sind.

In alternativen bevorzugten Ausführungsformen umfasst das mindestens eine klebrig machende Harz ein voll- oder teilhydriertes Kohlenwasserstoffharz und/oder mindestens ein Naturharz auf Kolophonium- oder Tallharzbasis oder eines Pentaerythritol- oder Gylcerinesters oder Gemische davon. Das mindestens eine voll- oder teilhydrierte Kohlenwasserstoffharz kann insbesondere ein aromatisch modifiziertes Harz, ein Polyterpen, ein Terpen-Phenolharz, ein 1,3-Pentadienharz, ein Cyclopentadienharz, ein 2-Methyl-2-Buten-Copolymer oder ein Derivat der vorgenannten umfassen.

In bevorzugten Ausführungsformen enthält der Haft-Schmelzklebstoff 20 bis 65 Gew.-% an mindestens einem klebrig machenden Harz, stärker bevorzugt 25 bis 60 Gew.-% an mindestens einem klebrig machenden Harz, stärker bevorzugt 40 bis 55 Gew.-% an mindestens einem klebrig machenden Harz, basierend auf dem Gesamtgewicht des Haft-Schmelzklebstoffs.

Der Haft-Schmelzklebstoff der vorliegenden Erfindung kann weiterhin gegebenenfalls mindestens einen Weichmacher (in der vorliegenden Erfindung auch bezeichnet als "d)") enthalten. Dieser kann bevorzugt ausgewählt werden aus Poly(iso)butylen, Paraffinen, Mineralölen, Polypropylen-, Polybutylen-, Polyisopren-Oligomeren, hydrierte Polyisopren-und/oder Polybutadien-Oligomeren, Benzoatestern, Phthalaten, Adipaten, Polypropylenglykolen, Polybutylenglykolen, Silikonölen, Pflanzenölen oder Kombinationen davon, stärker bevorzugt aus Paraffinen und Mineralölen oder deren Kombinationen. Geeignete Öle der vorstehend genannten umfassen, sind aber nicht beschränkt auf medizinische Weißöle, naphtenische Mineralöle oder pflanzliche Öle und deren Derivate. Beispielhafte Mineralöle sind kommerziell erhältlich unter dem Handelsnamen Nyflex^{®} von Nynas AB (Stockholm, Schweden), z.B. Nyflex^{®} 222b. Es können auch Ester als Weichmacher eingesetzt werden, z. B. flüssige Polyester und Glycerinester. Dabei soll das zahlenmittlere Molekulargewicht von Polyalkylenglykolen oder Polybutylenoligomeren vorzugsweise im Bereich von 200 bis 6000 g/mol liegen, Polyolefine sollten bevorzugt ein zahlenmittleres Molekulargewicht bis etwa 2000 g/mol aufweisen, insbesondere bevorzugt bis 1000 g/mol. In alternativen bevorzugten Ausführungsformen wird der mindestens eine Weichmacher ausgewählt aus Weißölen, mineralischen Ölen, Poly(iso)butylenen und flüssige oder pastöse hydrierte Kohlenwasserstoffe oder Kombinationen davon. Stärker bevorzugt ist Polyisobutylen mit einem gewichtsmittleren Molekulargewicht M_{w} von kleiner als 5000 g/mol.

In bevorzugten Ausführungsformen enthält der Haft-Schmelzklebstoff 1 bis 35 Gew.-% an mindestens einem Weichmacher, stärker bevorzugt 5 bis 30 Gew.-% an mindestens einem Weichmacher, stärker bevorzugt 10 bis 20 Gew.-% an mindestens einem Weichmacher, bezogen auf das Gesamtgewicht des Haft-Schmelzklebstoffs.

Der Haft-Schmelzklebstoff der vorliegenden Erfindung kann weiterhin gegebenenfalls mindestens ein Additiv (in der vorliegenden Erfindung auch bezeichnet als "e)") umfassen. In bevorzugten Ausführungsformen ist das mindestens eine Additiv ausgewählt aus Füllstoffen, Pigmenten, Stabilisatoren, insbesondere sterisch gehinderten Phenolen, Phosphiten, Thioestern, oder Kombinationen davon.

In bevorzugten Ausführungsformen enthält der Haft-Schmelzklebstoff 0,1 bis 5 Gew.-% an mindestens einem Additiv, stärker bevorzugt 0,5 bis 3,5 Gew.-% an mindestens einem Additiv, am stärksten bevorzugt 1 bis 3 Gew.-% an mindestens einem Additiv, bezogen auf das Gesamtgewicht des Haft-Schmelzklebstoffs.

Als Zwischenschicht werden, bevorzugt thermoplastische, Kunststoffe eingesetzt, die als Film bevorzugt die Eigenschaften haben, wasser- und luftdicht und bis zu einem bestimmten Maß wasserdampfundurchlässig bzw. wasserdampfdiffusionsoffen zu sein sowie die beiden Substrate miteinander zu verbinden. In stärker bevorzugten Ausführungsformen der vorliegenden Erfindung ist der Kunststoff der Mittellage ausgewählt aus thermoplastischen Polyolefinen, insbesondere Ethylen-Propylen-Dien-Kautschuk, Polyethylen, Polyisobutylen, Polypropylen, Butylkautschuk; Ethyl-Vinylacetat; Polyvinylchlorid; Polyester; Polyamid; oder Polyurethan. In stärker bevorzugen Ausführungsformen ist der Kunststoff der Mittellage ausgewählt aus Polypropylen und Polyethylen.

Da die Wasserdampfdiffusion, die mit dem sd-Wert charakterisiert wird (in der vorliegenden Erfindung gemessen nach DIN EN ISO 12572), durch das Polymer begründet ist, werden für den dampfbremsenden bzw. dampfsperrenden Bereich (sd-Wert > 2 m bis 100 m) bevorzugt Polyolefine eingesetzt und für den diffusionsoffenen Bereich (sd-Wert < 2 m) Copolyamide, Copolyester oder thermoplastische Polyurethane. Der sd-Wert gibt die Dicke einer Luftschicht an, die den gleichen Widerstand gegenüber Wasserdampfdiffusion wie der Werkstoff aufweist. In einer bevorzugten Ausführung kann zusätzlich eine Aluminiumfolie kaschiert werden. Dadurch wird eine Wasserdampfdiffusion durch das Produkt fast vollständig verhindert und der sd-Wert je nach Dicke der Aluminiumfolie auf deutlich mehr als 100 m erhöht.

Das Flächengewicht der Kunststoffschicht kann dem Anforderungsprofil entsprechend zwischen 20 g/m² bis 250 g/m² betragen und liegt bevorzugt bei 80 g/m² bis 130 g/m². In der bevorzugten Ausführung wird eine LDPE (low density Polyethylen)-Zwischenschicht mit 130 g/m² eingesetzt.

In bevorzugten Ausführungsformen der vorliegenden Erfindung umfasst der Haft-Schmelzklebstoff,
5 bis 15 Gew.-%, bevorzugt 8 bis 12 Gew.-% an a);
15 bis 30 Gew.-%, bevorzugt 18 bis 25 Gew.-% an b);
25 bis 60 Gew.-%, bevorzugt 40 bis 55 Gew.-% an c);
5 bis 30 Gew.-%, bevorzugt 10 bis 20 Gew.-% an d); und
0,1 bis 5 Gew.-%, bevorzugt 1 bis 3 Gew.-% an e), bezogen auf das Gesamtgewicht des Haft-Schmelzklebstoffs.

In einer bevorzugten Ausführungsform der vorliegenden Erfindung beträgt die Dicke der Folienbahn 0,3 bis 1 mm, insbesondere 0,4 bis 0,7 mm.

In einer bevorzugten Ausführungsform der vorliegenden Erfindung weist die Selbstklebeschicht eine Breite von 10 bis 50 mm, insbesondere von 20 bis 30 mm auf.

Die Erfindung betrifft auch einen Fensterrahmen mit einer angeklebten Folienbahn gemäß der vorliegenden Erfindung. Solche Fensterrahmen können bereits werksseitig mit der Folienbahn ausgerüstet werden, so dass sie auf der Baustelle nur eingesetzt und die Folienbahn angeklebt sowie verputzt zu werden braucht.

Besonders vorteilhaft kann die erfindungsgemäße Folienbahn zum Abdichten der Anschlüsse von Fensterrahmen an tragende Baukörper bei vorgehängten Fassaden sowie bei ein- oder mehrschichtigen Fassaden und/oder mit Wärmedämm-Verbundsystemen zu beschichtenden Fassaden eingesetzt werden.

Eine weitere besonders vorteilhafte Verwendung der erfindungsgemäßen Folienbahn besteht im Abdichten der Anschlüsse von unterhalb einer Dachkonstruktion angeordneten Dampfsperrfolien an die Außenwände, den Kamin und/oder sonstige Durchdringungen des Daches. In diesem Fall wird die erfindungsgemäße Folienbahn in der wasserdampfdiffusionssperrenden Ausführung eingesetzt.

Vorteilhaft ist außerdem die Verwendung der erfindungsgemäßen Folienbahn in der wasserdampfdiffusionssperrenden Ausführung als ganzflächige Abdichtung von Dächern zur Erzielung der Wind- und Luftdichtigkeit als Wasserdampfdiffusionsbremse bzw. -sperre.

Als Außenlage (Substrate) für die erfindungsgemäße Folie können Vliese, Gewebe, technische Gewirke und Stricke aus synthetischen und natürlichen Fasern und Glas sowie verstärktes Papier und Folien oder deren Kombination eingesetzt werden, sofern sie einen haftenden Verbund zur Schmelze und zum Klebstoff eingehen und den Produktanforderungen genügen. Die Flächengewichte der Substrate können bevorzugt von 20 g/m² bis 300 g/m², stärker bevorzugt 80 g/m² bis 100 g/m² betragen. In einer bevorzugten Ausführung werden zwei Polyester-Nadelvliese mit je 80 g/m² eingesetzt.

In bevorzugten Ausführungsformen der vorliegenden Erfindung ist die Folienbahn dadurch gekennzeichnet,
dass die Selbstklebeschicht 60 bis 98,5% der Oberfläche der Außenlage, auf die sie aufgebracht ist, bedeckt, wobei die nicht bedeckte Oberfläche bevorzugt ein Streifen ist, der an beiden Längsseiten an parallel zur Folienbahn verlaufende Kanten der Selbstklebeschicht über die komplette Länge der Folienbahn angrenzt. Stärker bevorzugt ist, dass der Streifen eine Breite von 5 bis 30 mm aufweist, am stärksten bevorzugt 8 bis 15 mm. In weiteren bevorzugten Ausführungsformen beträgt der Abstand einer einer der Längsseiten der Folienbahn zugewandten Kante des Streifens zu dieser Längsseiten der Folienbahn 10 bis 200 mm, stärker bevorzugt 15 bis 100 mm, am stärksten bevorzugt 20 bis 40 mm.

### Die Herstellung der Folienbahn

Bei der Herstellung der Dampfsperrfolienbahn laufen zwei Bahnen aus Vlies durch den Spalt zweier Walzen, wo sie aufeinandergepresst werden. Gleichzeitig wird das für die Mittellage der Folienbahn eingesetzte Polymer-Granulat im Extruder unter Temperatur und Druck verflüssigt. Die Schmelze wird im gekühlten Walzenspalt zwischen den Substraten abgelegt und auf Raumtemperatur abgekühlt. Die erstarrte Masse verbindet die Vliese zu dem Produkt. Der Haft-Schmelzklebstoff wird gemäß dem Fachmann bekannten Techniken hergestellt und das Aufbringen des Haft-Schmelzklebstoffs kann durch dem Fachmann bekannte Verfahren erfolgen, wie zum Beispiel mittels einer Schlitzdüse, Sprüh-Auftrag oder Vorhangbeschichtung.

### Die Verwendung im Fensterbereich

Die Dichtungsfolie kann am Fenster und auf dem Baukörper mittels eines Selbstklebestreifens befestigt werden, der auch bereits auf der Dichtungsbahn aufgebracht sein kann, oder zusätzlich durch Einsatz eines Spezial-Polymers verklebt werden. Das Verwenden eines zusätzlichen Spezial-Polymers hat den Vorteil, dass durch Aufbringen einer entsprechenden Menge des Spezial-Polymers die baustellenüblichen Unebenheiten der Baukörperoberfläche rationell und sicher ausgeglichen werden können. Die Folie ist nach Trocknung des Klebstoffes mit allen bautechnisch üblichen Putzen überputzbar. Sie kann überstrichen oder, was wichtig bei Wärmedämm-Verbundsystemen ist, durch Einsatz aller handelsüblichen Klebstoffe mit Dämmstoffen überklebt werden.

Aufgrund der Materialeigenschaften kann sie schnell und korrekt auch in Ecken eingepasst werden. Zusätzlich erlaubt der spezielle Haft-Schmelzklebstoff der vorliegenden Erfindung ein einfaches Nachjustieren der Folie. Die Summe der Eigenschaften der Folie in Zusammenhang mit der rationellen Verarbeitung gewährleistet unter baustellenüblichen Bedingungen sowohl die Wasserdichtigkeit als auch die Luft- und Winddichtigkeit, wobei die Folie je nach Ausstattung und entsprechender Folienbreite die Wasserdampfdiffusion bremst, fast vollständig verhindert oder, wenn dies notwendig ist, z. B. durch Anbringen der Folie auf der sogenannten kalten Seite der Wärmedämmung, wasserdampfdiffusionsoffen ist.

Eine weitere Einsatzmöglichkeit dieser Folie ist die Sicherstellung der Luft- und Winddichtigkeit bei allen Anschlussfugen auch außerhalb der Fenster, z. B. bei der Sanierung von Betonfertigteilfassaden. Hier müssen die Fugen winddicht sein. Anschließend wird die Fassade mit Wärmedämmsystemen überarbeitet; deshalb muss die Folienoberfläche überklebbar sein.

### Die Verwendung im Dachbereich

Je nach Ausstattung der Bahn kann diese mit unterschiedlichem sd-Wert und damit sowohl dampfbremsend als auch dampfsperrend und, wenn dies gewünscht wird, auch dampfoffen ausgestattet werden. Die Bahn kann nicht nur als Anschlussabdichtung herkömmlicher, bereits heute eingesetzter Wind- und/oder Dampfsperrfolien verwendet werden, sie kann auch auf der gesamten Dachfläche vollflächig als Wind- und Dampfsperre eingesetzt werden. Die Überlappungen sind dann zusätzlich mit einem Kontaktband, z. B. auf Butylbasis, auf Acrylbasis, oder mit Dichtstoffen o. ä. abzudichten.

Im Anschlussbereich zur Wand wird die Dampfsperre herumgezogen. Die Breite der Verklebung auf dem Wandbildner richtet sich nach den bauphysikalischen Gegebenheiten. Auf dem Wandbildner wird die Folie, gegebenenfalls zusätzlich mittels eines Spezial-Polymers, verklebt. Nach der Durchtrocknung des Polymers kann die Dichtfolie mit jedem baustellenüblichen Mörtel überputzt oder überklebt bzw. überstrichen werden.

Eine weitere Einsatzmöglichkeit besteht als spezielle Rand-Anschlussfolie, wobei davon ausgegangen wird, dass die eigentliche Dampfsperre mit nach dem Stand der Technik üblichen Materialien, also z. B. Polyethylen-Folien, hergestellt wird. In diesem Fall wird die Folie in Breiten von 50 bis 500 mm, vorzugsweise 100 bis 300 mm, in Abhängigkeit von den bauphysikalischen Gegebenheiten eingesetzt. Sie kann einseitig mittels eines Klebestreifens oder zusätzlich mit Hilfe eines Spezial-Polymers oder Dichtstoffs auf der Dampfsperre verklebt werden. Vorzugsweise ist die Folie aber bereits mit einem Selbstklebestreifen versehen, der den wind- und luftdichten Anschluss zwischen den Bahnen der großflächigen Dampfsperre des Daches und dem überputzbaren erfindungsgemäßen Folienstreifen herstellt.

Der Folienstreifen selbst wird auf dem Mauerwerk wie oben beschrieben, gegebenenfalls zusätzlich mittels eines Spezial-Polymers, aufgeklebt. Der Vorteil solcher Spezial-Polymere, die in Kartuschen oder Schlauchbeuteln geliefert werden und in bekannter Handwerkstechnik verarbeitet werden, liegt darin, dass sie bei vorhandenen Unebenheiten etwas satter aufgebracht werden können, so dass auch unter Baustellenbedingungen immer eine vollständige und dauerhafte Luft- und Winddichtigkeit erzielt wird.

Der Folienstreifen kann in entsprechender Breite, die auf den sd-Wert des Baustoffes abgestimmt ist, eingesetzt werden, so dass sichergestellt ist, dass auch im Anschlussbereich neben der Luft- und Winddichtigkeit ein entsprechend hoher Wasserdampfdiffusion-Widerstand erzielt wird, der garantiert, dass die eindiffundierende Feuchtigkeit immer geringer ist als die, die in den Trockenperioden wieder hinausdiffundieren kann.

### Beispiele

**Tabelle 1: Erfindungsgemäße Haft-Schmelzklebstoffzusammensetzung**

| Verbindung | Gew.-%¹⁾ |
|---|---|
| Styrol-Isoprene-Styrol Copolymer | 9 |
| Styrol-Butadien Kautschuk | 20 |
| Aromatisch modifiziertes aliphatisches Kohlenwasserstoffharz | 26 |
| Terpenphenolharz | 28 |
| Naphthenisches Mineralöl | 16 |
| Tris(2,4-di-tert-butylphenyl)phosphit; (Antioxidant) | 1 |

| | |
|---|---|
| ¹⁾ bezogen auf das Gesamtgewicht des Haft-Schmelzklebstoffs | |

Aufgebracht auf eine Polyethylen Mittellage die doppelseitig mit Vlies umgeben ist (Beispiel 1).

Als Vergleichsprodukt wurde eine kommerziell erhältliche Folienbahn verwendet die einen Haftklebstoff auf Acrylat-Basis verwendet (Fentrim^{®} 2 erhältlich von Siga, Ruswil, Schweiz) (Vergleichsbeispiel 1).

Die Haftzugwerte für Beispiel 1 und Vergleichsbeispiel 1 wurden in Anlehnung an die ÖNORM EN 12004 ermittelt. Dabei wurden Mörtel und die Fließen in der ÖNORM durch die jeweilige Folienbahn ersetzt. Die Folienbahn (5cm x 5cm) wird auf den jeweiligen Ziegel aufgelegt, sodass der Haft-(Schmelz)klebstoff auf der Ziegeloberfläche aufliegt, und mit dem 20 N-Gewicht 30 Sekunden lang belastet. Anschließend werden die so erhaltenen Prüfkörper 24 Stunden bei 23°C und 50% r.F. waagrecht gelagert. Danach wird der Ziegel bis zur Prüfung senkrecht gelagert. Einen Tag vor der Prüfung werden die Haftzuganker mit Epoxidharz aufgeklebt. Nach insgesamt 7 Tagen Lagerung wird die Folienbahn mit der Prüfmaschine (Firma Zwick) abgezogen.

**Tabelle 2: Test der Haftzugwerte**

| Die Haftzugwerte sind in N/mm² angegeben. | | |
|---|---|---|
| Untergrund | Vergleichsbeispiel 1 | Beispiel 1 |
| Ziegel ohne Primer | 0,05 | 0,11 |
| Ziegel mit Glattstrich ohne Primer | 0,16 | 0,21 |

Wie aus der Tabelle ersichtlich ist, weißt die erfindungsgemäße mehrlagige Folienbahn deutlich verbesserte Haftzugwerte gegenüber der aus dem Stand der Technik bekannten Folienbahn auf.

## Patentansprüche

1. Mehrlagige Folienbahn für den Baubereich, die vorzugsweise diffusionsoffen bis diffusionssperrend ist, bestehend aus einem, insbesondere bevorzugt thermoplastischen, Kunststoff als Mittellage und überputzbaren Außenlagen ausgewählt aus Vlies, Gewebe, technischem Gewirke, Stricken, Glasfasern, verstärktem Papier, Folien oder einer Kombination davon und einer Selbstklebeschicht, welche auf einer der nicht an der Mittellage liegenden Oberfläche einer der Außenlagen aufgebracht ist,
**dadurch gekennzeichnet,**
**dass** die Selbstklebeschicht ein Haft-Schmelzklebstoff ist, welcher umfasst:
a) mindestens ein Styrol-Isopren-Styrol (SIS) Block-Copolymer;
b) mindestens ein Styrol-Butadien Kautschuk (SBR); und
c) mindestens ein klebrig machendes Harz.

2. Folienbahn nach Anspruch 1, **dadurch gekennzeichnet,**
**dass** der Haft-Schmelzklebstoff ferner
d) mindestens einen Weichmacher; und
e) gegebenenfalls mindestens ein Additiv umfasst.

3. Folienbahn nach Anspruch 1 oder 2, **dadurch gekennzeichnet,**
**dass** der Kunststoff der Mittellage ausgewählt ist aus thermoplastischen Polyolefinen, insbesondere Ethylen-Propylen-Dien-Kautschuk, Polyethylen, Polyisobutylen, Polypropylen; Butylkautschuk; Ethyl-Vinylacetat; Polyvinylchlorid; Polyester; Polyamid; oder Polyurethan.

4. Folienbahn nach einem der Ansprüche 1 bis 3, **dadurch gekennzeichnet,**
**dass** der Haft-Schmelzklebstoff,
5 bis 15 Gew.-%, bevorzugt 8 bis 12 Gew.-% an a);
15 bis 30 Gew.-%, bevorzugt 18 bis 25 Gew.-% an b);
25 bis 60 Gew.-%, bevorzugt 40 bis 55 Gew.-% an c);
5 bis 30 Gew.-%, bevorzugt 10 bis 20 Gew.-% an d); und
0,1 bis 5 Gew.-%, bevorzugt 1 bis 3 Gew.-% an e), bezogen auf das Gesamtgewicht des Haft-Schmelzklebstoffs umfasst.

5. Folienbahn nach einem der Ansprüche 1 bis 4, **dadurch gekennzeichnet,**
**dass** das mindestens eine klebrig machende Harz c) ausgewählt ist aus Kohlenwasserstoffharzen, Polyterpenharzen, Kolophoniumharze oder deren Ester oder Kombinationen davon.

6. Folienbahn nach einem der Ansprüche 1 bis 5, **dadurch gekennzeichnet,**
**dass** der mindestens eine Weichmacher d) ausgewählt ist aus Poly(iso)butylen, Paraffinen, Mineralölen, Polypropylen-, Polybutylen-, Polyisopren-Oligomeren, hydrierte Polyisopren- und/oder Polybutadien-Oligomeren, Benzoatestern, Phthalaten, Adipaten, Polypropylenglykolen, Polybutylenglykolen, Silikonölen, Pflanzenölen oder Kombinationen davon.

7. Folienbahn nach einem der Ansprüche 1 bis 6, **dadurch gekennzeichnet,**
**dass** das mindestens eine Additiv e) ausgewählt ist aus Füllstoffen, Pigmenten, Stabilisatoren, insbesondere sterisch gehinderten Phenolen, Phosphiten, Thioestern, oder Kombinationen davon.

8. Folienbahn nach einem der Ansprüche 1 bis 7,
**dadurch gekennzeichnet,**
**dass** ihre Dicke 0,3 bis 1 mm, insbesondere bevorzugt 0,4 bis 0,7 mm beträgt.

9. Folienbahn nach einem der Ansprüche 1 bis 8,
**dadurch gekennzeichnet,**
**dass** die Selbstklebeschicht im Wesentlichen die Oberfläche der Außenlage, auf die sie aufgebracht ist, komplett bedeckt.

10. Folienbahn nach einem der Ansprüche 1 bis 8,
**dadurch gekennzeichnet,**
**dass** die Selbstklebeschicht 60 bis 98,5% der Oberfläche der Außenlage, auf die sie aufgebracht ist, bedeckt, wobei die nicht bedeckte Oberfläche bevorzugt ein Streifen ist, der an beiden Längsseiten an parallel zur Folienbahn verlaufende Kanten der Selbstklebeschicht über die komplette Länge der Folienbahn angrenzt.

11. Fensterrahmen mit einer angeklebten Folienbahn nach einem der Ansprüche 1 bis 10.

12. Verwendung der Folienbahn nach einem der Ansprüche 1 bis 10 zum Abdichten der Anschlüsse von Fensterrahmen an tragende Baukörper bei vorgehängten Fassaden sowie bei ein- oder mehrschichtigen Fassaden und/oder mit Wärmedämm-Verbundsystemen zu beschichtenden Fassaden.

13. Verwendung der Folienbahn nach einem der Ansprüche 1 bis 10 zum Abdichten der Anschlüsse von unterhalb einer Dachkonstruktion angeordneten Dampfsperrfolien an die Außenwände, den Kamin und/oder sonstige Durchdringungen des Daches.

14. Verwendung der Folienbahn nach einem der Ansprüche 1 bis 10 als ganzflächige Abdichtung von Dächern zur Erzielung der Wind- und Luft-Dichtigkeit und als Wasserdampfdiffusionsbremse bzw. -sperre.

## Claims

1. A multilayer film strip for the construction sector, which preferably ranges from being diffusion-permitting to being diffusion-resistant, consisting of a plastics material, in particular a preferably thermoplastic material, as the central layer and outer layers that can be plastered over and are selected from nonwoven material, woven fabric, technical warp-knitted fabric, weft-knitted fabrics, glass fibers, reinforced paper, films or a combination thereof, and a self-adhesive layer which is applied to a surface of one of the outer layers which is not resting against the central layer, **characterized in that** the self-adhesive layer is a pressure-sensitive hotmelt adhesive comprising:
a) at least one styrene-isoprene-styrene (SIS) block copolymer;
b) at least one styrene-butadiene rubber (SBR); and
c) at least one tackifying resin.

2. The film strip according to claim 1, **characterized in that** the pressure-sensitive hotmelt adhesive further comprises
d) at least one plasticizer; and
e) optionally at least one additive.

3. The film strip according to either claim 1 or claim 2, **characterized in that** the plastics material of the central layer is selected from thermoplastic polyolefins, in particular ethylene propylene diene rubber, polyethylene, polyisobutylene and polypropylene; butyl rubber; ethyl vinyl acetate; polyvinyl chloride; polyester; polyamide or polyurethane.

4. The film strip according to one of claims 1 to 3, **characterized in that** the pressure-sensitive hotmelt adhesive comprises
from 5 to 15 wt.%, preferably from 8 to 12 wt.%, of a);
from 15 to 30 wt.%, preferably from 18 to 25 wt.%, of b);
from 25 to 60 wt.%, preferably from 40 to 55 wt.%, of c);
from 5 to 30 wt.%, preferably from 10 to 20 wt.%, of d); and
from 0.1 to 5 wt.%, preferably from 1 to 3 wt.%, of e), based on the total weight of the pressure-sensitive hotmelt adhesive.

5. The film strip according to one of claims 1 to 4, **characterized in that** the at least one tackifying resin c) is selected from hydrocarbon resins, polyterpene resins, rosin resins or their esters, or combinations thereof.

6. The film strip according to one of claims 1 to 5, **characterized in that** the at least one plasticizer d) is selected from poly(iso)butylene, paraffins, mineral oils, polypropylene oligomers, polybutylene oligomers, polyisoprene oligomers, hydrated polyisoprene oligomers and/or hydrated polybutadiene oligomers, benzoate esters, phthalates, adipates, polypropylene glycols, polybutylene glycols, silicone oils, plant oils or combinations thereof.

7. The film strip according to one of claims 1 to 6, **characterised in that** the at least one additive e) is selected from fillers, pigments, stabilizers, in particular sterically hindered phenols, phosphites, thioesters or combinations thereof.

8. The film strip according to one of claims 1 to 7, **characterized in that** said film strip has a thickness of from 0.3 to 1 mm, particularly preferably from 0.4 to 0.7 mm.

9. The film strip according to one of claims 1 to 8, **characterized in that** the self-adhesive layer substantially completely covers the surface of the outer layer to which it is applied.

10. The film strip according to one of claims 1 to 8, **characterized in that** the self-adhesive layer covers from 60 to 98.5 % of the surface of the outer layer to which it is applied, the surface that is not covered preferably being a strip, the two longitudinal sides of which abut edges of the self-adhesive layer, which extend in parallel with the film strip, over the entire length of the film strip.

11. A window frame comprising a film strip according to one of claims 1 to 10 that is adhered thereto.

12. The use of the film strip according to one of claims 1 to 10 for sealing the points at which window frames are attached to supporting building structures in curtain facades and in single-layer or multilayer facades and/or facades to be coated with composite heat insulation systems.

13. The use of the film strip according to one of claims 1 to 10 for sealing the points at which vapor barrier films arranged below a roof construction are attached to the external walls, the chimney and/or other points of penetration of the roof.

14. The use of the film strip according to one of claims 1 to 10 as a seal for roofs that is applied to the entire surface thereof to make said roofs wind-proof and airtight and to inhibit or block the diffusion of water vapor.

## Revendications

1. Bande de film multicouche, destinée au secteur de la construction, qui est de préférence diffusante à non-diffusante, ladite bande de film étant constituée d'une matière synthétique, de manière particulièrement préférée thermoplastique, comme couche intermédiaire et couches extérieures pouvant être crépies qui sont choisies parmi un non-tissé, un tissu, un tissu maillé technique, des cordes, des fibres de verre, du papier renforcé, des films ou une combinaison de ceux-ci et une couche autoadhésive qui est appliquée sur la surface d'une des couches extérieures qui ne porte pas sur la couche intermédiaire, **caractérisée en ce que** la couche autoadhésive est un adhésif fusible de contact qui comporte :
a) au moins un copolymère à blocs styrène-isoprène-styrène (SIS) ;
b) au moins un caoutchouc styrène-butadiène (SBR) ; et
c) au moins une résine tackifiante.

2. Bande de film selon la revendication 1, **caractérisée en ce que** l'adhésif fusible de contact comporte en outre
a) au moins un plastifiant ; et
b) éventuellement au moins un additif.

3. Bande de film selon la revendication 1 ou 2, **caractérisée en ce que** la matière plastique de la couche intermédiaire est choisie parmi les polyoléfines thermoplastiques, en particulier le caoutchouc éthylène-propylène-diène, le polyéthylène, le polyisobutylène, le polypropylène ; le caoutchouc butyle; l'éthylène-acétate de vinyle ; le chlorure de polyvinyle ; le polyester ; le polyamide ; ou le polyuréthane.

4. Bande de film selon l'une des revendications 1 à 3, **caractérisée en ce que** l'adhésif fusible de contact contient
5 à 15% en poids, de préférence 8 à 12% en poids, de a) ;
15 à 30% en poids, de préférence 18 à 25% en poids, de b) ;
25 à 60% en poids, de préférence 40 à 55% en poids, de c) ;
5 à 30% en poids, de préférence 10 à 20% en poids, de d) ; et
0,1 à 5% en poids, de préférence 1 à 3% en poids, de e), sur la base du poids total de l'adhésif fusible de contact.

5. Bande de film selon l'une des revendications 1 à 4, **caractérisée en ce que** l'au moins une résine tackifiante c) est choisie parmi les résines d'hydrocarbures, les résines de polyterpènes, les résines de colophane ou leur esters ou des combinaisons de ceux-ci.

6. Bande de film selon l'une des revendications 1 à 5, **caractérisée en ce que** l'au moins un plastifiant d) est choisi parmi le poly(iso)butylène, les paraffines, les huiles minérales, les oligomères de polypropylène, de polybutylène, de polyisoprène, les oligomères de polyisoprène et/ou de polybutadiène hydrogénés, les esters de benzoates, les phtalates, les adipates, les polypropylène-glycols, les polybutylène-glycols, les huiles de silicone, les huiles végétales ou des combinaisons de ceux-ci.

7. Bande de film selon l'une des revendications 1 à 6, **caractérisée en ce que** l'au moins un additif e) est choisi parmi les charge, les pigments, les stabilisants, notamment les phénols à empêchement stérique, les phosphites, les thioesters, ou des combinaisons de ceux-ci.

8. Bande de film selon l'une des revendications 1 à 7, **caractérisée en ce que** son épaisseur va de 0,3 à 1 mm, de façon particulièrement préférée de 0,4 à 0,7 mm.

9. Bande de film selon l'une des revendications 1 à 8, **caractérisée en ce que** la couche autoadhésive recouvre sensiblement toute la surface de la couche extérieure sur laquelle elle est appliquée.

10. Bande de film selon l'une des revendications 1 à 8, **caractérisée en ce que** la couche autoadhésive recouvre 60 à 98,5% de la surface de la couche extérieure sur laquelle elle est appliquée, la surface non couverte étant de préférence une bande qui est adjacente sur toute la longueur de la bande de film, sur deux côtés longitudinaux, aux bords de la couche autoadhésive qui s'étend parallèlement à la bande de film.

11. Cadre de fenêtre pourvu d'une bande de film collée selon l'une des revendications 1 à 10.

12. Utilisation de la bande de film selon l'une des revendications 1 à 10 pour assurer l'étanchéité des raccordements de cadres de fenêtres à des structure portante dans le cas de mursrideaux et dans le cas de façades monocouches ou multicouches et/ou de façades à recouvrir avec des systèmes composites thermo-isolants.

13. Utilisation de la bande de film selon l'une des revendications 1 à 10 pour rendre étanche des raccordements de films pare-vapeur disposés au-dessous de la structure de toit au niveau des parois extérieures, de la cheminée et/ou d'autres traversées du toit.

14. Utilisation de la bande de film selon l'une des revendications 1 à 10 pour rendre les toits étanches sur toute leurs surface, afin d'obtenir une étanchéité contre le vent et l'air, et pour bloquer ou freiner la diffusion de vapeur d'eau.
